# EUROPEAN PATENT SPECIFICATION

(11) **EP 2 498 623 B1**
(45) Date of publication and mention of the grant of the patent: **04.12.2013**
(21) Application number: 10768206.4
(22) Date of filing: 01.10.2010
(51) Int. Cl.: A23L 1/22, A23L 1/226, A23L 1/228

(54) **FLAVOUR ENHANCEMENT**
GESCHMACKSVERSTÄRKUNG
RENFORCEMENT DE GOÛT

(30) Priority: 02.10.2009 GB 0917325
(43) Date of publication of application: 19.09.2012
(73) Proprietor: Givaudan SA, 1214 Vernier (CH)
(72) Inventor: HAIBER, Stephan, NL-1411 GP Naarden (NL); RENES, Harry, NL-8241 AS Lelystad (NL)
(74) Representative: Givaudan Patents
(86) International application number: PCT/EP2010/064622
(87) International publication number: WO 2011/039340

(56) References cited:
- EP-A1- 1 252 825
- EP-A1- 1 356 744
- WO-A1-2004/075663
- WO-A1-2005/096841

## Description

This disclosure relates to umami flavour and to a method for its enhancement.

Umami is a flavour sensation generally associated with Asian cuisine. In addition, improved umami taste helps make low salt products more palatable. Umami flavour has traditionally been achieved by the addition of monosodium glutamate (MSG) to foodstuffs. However, the presence of MSG in foodstuffs is not universally welcome, and there is an interest in the achievement of umami taste with lower proportions of MSG than is normally the case. Examples of proposed partial or complete replacements for MSG may be found in, for example, WO 2004/075663, EP 1 356 744 and EP 1 252 825.

It has now been found that it is possible to achieve umami taste with a reduced proportion of MSG. There is therefore provided a method of providing umami taste to a consumable composition, comprising the addition to the composition of monosodium glutamate, in which the proportion of monosodium glutamate that would normally be used is reduced and replaced with a compensatory proportion of γ-amino butyric acid.

γ-amino butyric acid (hereinafter "GABA") is a known compound commonly found in many foods. It has been mentioned as a taste improver in a number of applications, for example, Japanese Patent 4128893 and Kökai 2008-113565. GABA has no umami flavour of its own, so it was surprising to find that, in combination with MSG, it considerably enhances umami effect to such an extent that the proportion of the former can be considerably reduced.

By "reduced proportion of MSG" is meant a proportion of MSG that is lower than that which would normally be needed to provide a desired quality or quantity of umami flavour. By "compensatory proportion" is meant the quantity of GABA needed, in conjunction with the MSG, to provide the desired quality or quantity of umami flavour. This generally lies within the range of 0.8-1.2 moles GABA per mole of MSG, the best results being achieved with equimolar proportions. However, it is possible for a flavourist to achieve particular effects by formulating outside these guidelines.

The proportions of MSG and GABA used in a consumable composition will naturally depend on the nature of the use and the desired flavour, and the skilled person can easily determine the relevant proportions for any case by means of routine, non-inventive experimentation. However, the levels of MSG required are considerably reduced. In normal use, a consumable product may contain up to 300 ppm of MSG. When used with a compensatory proportion of GABA, the amounts of GABA and MSG required can be as low as 5ppm of each, a total of 10ppm, while giving the same umami flavour as the 300ppm MSG alone. As a general guideline, the proportion of GABA can be from 5-100ppm, particularly from 10-50ppm. Again, in order to achieve particular effects, a flavourist may formulate outside these guidelines.

The enhancing of umami flavour may be applied to any composition in which umami flavour is desired. There is therefore also provided a consumable composition having an umami flavour, comprising a product base and an umami flavour-providing proportion of MSG and GABA in which there are from 0.8-1.2 moles GABA per mole of MSG, particularly equimolar proportions of GABA and MSG. By "product base" is meant the combination of all the usual art-recognised ingredients other than MSG and GABA required for the particular consumable composition.

In addition to the art-recognised ingredients hereinabove mentioned, there may also be added other ingredients that confer umami flavour. While not benefiting from the surprising MSG+GABA effect hereinabove described, these ingredients may be used to alter the subjective quality of the umami flavour attained, and therefore provide a variety of different umami taste sensations. This work is well within the skill of the art and the skilled flavourist may create a wide palette of pleasing effects. Particular examples of other umami compounds that are useful in this application are compounds (including salts thereof) according to Formula I 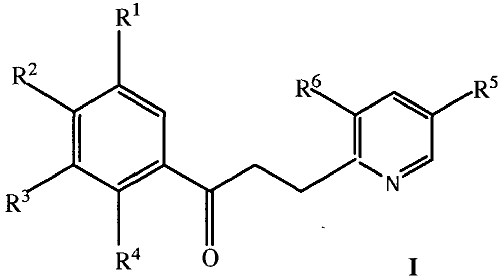 in which
R¹ is selected from H, methyl and ethyl;
R² is selected from H, OH, fluorine, C₁-C₄ linear or branched alkyl, C₁-C₆ alkoxy wherein the alkyl group is linear or branched, or comprises or consists of a C₃-C₅ cycloalkyl moiety;
R³ is selected from H, methoxy, methyl and ethyl;
or R² and R³ together form a bridging moiety -O-CH₂-O- between the phenyl carbon atoms to which they are connected;
R⁴ is selected from OH and methoxy; and
R⁵ and R⁶ are independently selected from H and methyl;
R¹, R², R³, R⁴, R⁵ and R⁶ being selected such that,
(i) when R² and R³ together form a bridging moiety -O-CH₂-O- between the phenyl carbon atoms to which they are connected, R¹, R⁵, R⁶ are H, and R⁴ is OH; and
(ii) when R⁴ is OH and R¹-R³ are H, at least one of R⁵, R⁶ is methyl.

Such compounds are described in UK patent application No. 0913804 and WO 2011/004016. Other non-limiting examples of umami flavour-conferring and -enhancing compounds include those described in EP 1642886, WO 2005/015158, EP 1312268, WO 2003/088768, EP 1291342 and WO 2006/003107.

Such other umami ingredients are typically added to a consumable composition at a concentration of between 0.01-100ppm.

By "consumable composition" is meant any composition that is taken into the mouth for ultimate spitting out or ingestion. The composition may be in any physical form, solid, liquid or gaseous. Non-limiting examples include all food products, food additives, nutraceuticals, pharmaceuticals and any product placed in the mouth including (but not limited to) chewing gum, oral care products, and oral hygiene products including but not limited to, cereal products, rice products, tapioca products, sago products, baker's products, biscuit products, pastry products, bread products, confectionery products, dessert products, gums, chewing gums, flavor or flavor-coated food/beverage containers, yeast products, baking-powder, salt and spice products, snack foods, savoury products, mustard products, vinegar products, sauces (condiments), soups, seasonings, ready-to-eat meals, gravies, nuts & nut products, tobacco products, cigars, cigarettes, processed foods, vegetable products, meat and meat products, egg products, milk and dairy products, yoghurts, cheese products, butter and butter substitute products, milk substitute products, soy products, edible oils and fat products, medicaments, beverages, carbonated beverages, alcoholic drinks such as beers, wines and spirits, non-alcoholic drinks such as soft drinks, including forms requiring reconstitution including, without limitation, beverage powder, milk based beverage powder, sugar-free beverage powder, beverage syrup, beverage concentrate, coffee and tea, food extracts, plant extracts, meat extracts, condiments, gelatins, pharmaceutical and non-pharmaceutical gums, tablets, lozenges, drops, emulsions, elixirs, syrups and other preparations for making beverages, and combinations thereof.

The disclosure is further described with reference to the following non-limiting examples, which depict particular embodiments.

### Example 1

A model savoury solution containing
Sodium chloride 6000 ppm
Monosodium glutamate (MSG) 300 ppm and
1/1 Mixture of inosine monophosphate (IMP) and guanosine monophosphate (GMP) 150 ppm
was used as the reference.

This solution was compared with a solution containing:
Salt 6000 ppm
MSG 300 ppm
1/1 Mixture of inosine monophosphate (IMP) and guanosine monophosphate (GMP) 150 ppm
Aspartic acid 15 ppm
Arginine 10 ppm and
Gamma amino butyric acid (GABA) 20 ppm.

The two solutions were compared by a small group of experienced tasters (3 male, 1 female). All members of the group preferred the second solution and described it as 'more umami', 'succulent', 'rich', 'more savoury' and 'lingering'.

### Example 2

A model savoury solution containing 5000 ppm table salt, 150 ppm MSG and 75 ppm IMP/GMP was used as a base.

Another solution was prepared containing 10 ppm GABA.

In a third solution, 10 ppm GABA was added to the base solution.

The solutions were compared by a small group of experienced tasters (3 male, 1 female). The base solution was described as salty and umami. The GABA solution was tasteless. All members of the group preferred the third solution over the first one and judged to be noticeably different from the base. The taste was described as fuller and longer lasting umami.

### Example 3

A commercially-available chicken bouillon was prepared (reference) (salt content 0.5 %). To one part of the bouillon 30 ppm of 1-(2-hydroxy-4-isobutoxyphenyl)-3-(pyridine-2-yl)propan-1-one was added (solution 1).

To another part 20 ppm of GABA was added (solution 2)

And to another part 30 ppm of 1-(2-hydroxy-4-isobutoxyphenyl)-3-(pyridine-2-yl)propan-1-one and 20 ppm of GABA was added (solution 3).

The solutions were compared by a small group of experienced tasters (3 male, 1 female).

The base bouillon was described as salty and umami. Solution 1, 2 and 3 were all described as better than the reference and described as 'more taste enhancement', 'more umami'. All tasters agreed solution 3 was the best one, described as 'most fullness', 'most richness'.

### Example 4

A reference solution containing 5000 ppm table salt, 15 ppm MSG and 75 ppm IMP/GMP was prepared. To different parts of this solution 5, 10, 15, 20, and 25 ppm GABA was added. The solutions were tasted by a small group of experienced tasters (3 male, 1 female). The best umami enhancement was seen in the solutions containing 5, 10, and 15 ppm GABA. 15 ppm of GABA was the favoured sample in comparison to the target.

## Claims

1. A method of providing umami taste to a consumable composition, comprising the addition to the composition of monosodium glutamate, in which the proportion of monosodium glutamate that would normally be used is reduced and replaced with a compensatory proportion of γ-amino butyric acid (GABA).

2. A method according to claim 1, in which there are from 0.8-1.2 moles GABA per mole of MSG, preferably equimolar proportions of GABA and MSG.

3. A method according to claim 1, in which the proportion of GABA present in the composition is from 5-100ppm, particularly from 10-50ppm.

4. A consumable composition having an umami flavour, comprising a product base and an umami flavour-providing proportion of MSG and GABA in which there are from 0.8-1.2 moles GABA per mole of MSG, particularly equimolar proportions of GABA and MSG.

5. A consumable composition having a umami flavour, comprising a product base and a umami flavour-providing proportion of MSG and GABA, according to claim 4, in which the proportion of GABA present in the composition is from 5-100ppm, particularly from 10-50ppm.

6. A consumable composition according to claim 4 or claim 5 having an umami flavour, in which there is additionally present a compound (including salts thereof) according to Formula I 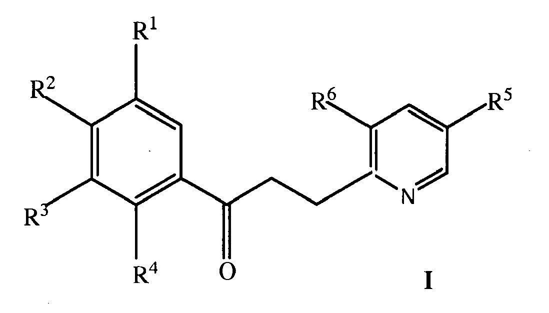 in which
R¹ is selected from H, methyl and ethyl;
R² is selected from H, OH, fluorine, C₁-C₄ linear or branched alkyl, C₁-C₆ alkoxy wherein the alkyl group is linear or branched, or comprises or consists of a C₃-C₅ cycloalkyl moiety;
R³ is selected from H, methoxy, methyl and ethyl;
or R² and R³ together form a bridging moiety -O-CH₂-O- between the phenyl carbon atoms to which they are connected;
R⁴ is selected from OH and methoxy; and
R⁵ and R⁶ are independently selected from H and methyl;
R¹, R², R³, R⁴, R⁵ and R⁶ being selected such that,
(i) when R² and R³ together form a bridging moiety -O-CH₂-O- between the phenyl carbon atoms to which they are connected, R¹, R⁵, R⁶ are H, and R⁴ is OH; and
(ii) when R⁴ is OH and R¹-R³ are H, at least one of R⁵, R⁶ is methyl.

## Patentansprüche

1. Verfahren zum Versehen einer verzehrbaren Zusammensetzung mit Umami-Geschmack, bei dem man der Zusammensetzung Mononatriumglutamat zusetzt, wobei der Anteil an Mononatriumglutamat, der normalerweise verwendet würde, verringert und durch einen kompensierenden Anteil von γ-Aminobuttersäure (GABA) ersetzt wird.

2. Verfahren nach Anspruch 1, bei dem 0,8-1,2 mol GABA pro Mol MSG, vorzugsweise äquimolare Anteile von GABA und MSG, vorliegen.

3. Verfahren nach Anspruch 1, bei dem der in der Zusammensetzung vorliegende Anteil an GABA 5-100 ppm, insbesondere 10-50 ppm, beträgt.

4. Verzehrbare Zusammensetzung mit Umami-Geschmack, umfassend eine Produktgrundlage und einen Umami-Geschmack bereitstellenden Anteil an MSG und GABA, in der 0,8-1,2 mol GABA pro Mol MSG, vorzugsweise äquimolare Anteile von GABA und MSG, vorliegen.

5. Verzehrbare Zusammensetzung mit Umami-Geschmack, umfassend eine Produktgrundlage und einen Umami-Geschmack bereitstellenden Anteil an MSG und GABA, nach Anspruch 4, in der der in der Zusammensetzung vorliegende Anteil an GABA 5-100 ppm, insbesondere 10-50 ppm, beträgt.

6. Verzehrbare Zusammensetzung nach Anspruch 4 oder Anspruch 5 mit Umami-Geschmack, in der zusätzlich eine Verbindung (einschließlich Salzen davon) gemäß Formel I 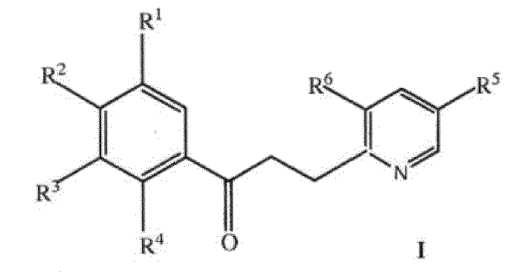 worin
R¹ aus H, Methyl und Ethyl ausgewählt ist;
R² aus H, OH, Fluor, geradkettigem oder verzweigtem C₁-C₄-Alkyl, C₁-C₆-Alkoxy, dessen Alkylgruppe geradkettig oder verzweigt ist, ausgewählt ist oder eine C₃-C₅-Cycloalkylgruppierung umfasst oder daraus besteht;
R³ aus H, Methoxy, Methyl und Ethyl ausgewählt ist; oder R² und R³ gemeinsam eine -O-CH₂-O-Verbrückungsgruppierung zwischen den Phenylkohlenstoffatomen, an die sie gebunden sind, bilden;
R⁴ aus OH und Methoxy ausgewählt ist; und
R⁵ und R⁶ unabhängig voneinander aus H und Methyl ausgewählt sind;
R¹, R², R³, R⁴, R⁵ und R⁶ so gewählt sind, dass dann,
(i) wenn R² und R³ gemeinsam eine -O-CH₂-O-Verbrückungsgruppierung zwischen den Phenylkohlenstoffatomen, an die sie gebunden sind, bilden, R¹, R⁵ und R⁶ für H stehen und R⁴ für OH steht; und,
(ii) wenn R⁴ für OH steht und R¹-R³ für H stehen, mindestens einer der Reste R⁵ oder R⁶ für Methyl steht;
vorliegt.

## Revendications

1. Méthode de fourniture d'une saveur d'umami à une composition consommable, comprenant l'addition à la composition de glutamate monosodique, où la proportion de glutamate monosodique qui serait habituellement utilisée est réduite et remplacée par une proportion compensatoire d'acide γ-aminobutyrique (GABA).

2. Méthode selon la revendication 1, dans laquelle on trouve 0,8-1,2 mole de GABA par mole de MSG, préférablement des proportions équimolaires de GABA et de MSG.

3. Méthode selon la revendication 1, dans laquelle la proportion de GABA présente dans la composition est de 5-100 ppm, en particulier de 10-50 ppm.

4. Composition consommable ayant une saveur d'umami, comprenant une base de produit et une proportion de MSG et de GABA fournissant une flaveur d'umami, où l'on trouve 0,8-1,2 mole de GABA par mole de MSG, en particulier des proportions équimolaires de GABA et de MSG.

5. Composition consommable ayant une saveur d'umami, comprenant une base de produit et une proportion de MSG et de GABA fournissant une flaveur d'umami, selon la revendication 4, où la proportion de GABA présente dans la composition est de 5-100 ppm, en particulier de 10-50 ppm.

6. Composition consommable selon la revendication 4 ou la revendication 5, ayant une saveur d'umami, dans laquelle on trouve également la présence d'un composé (y compris les sels de celui-ci) selon la Formule I 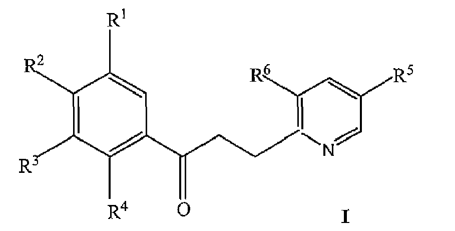 dans laquelle
R¹ est choisi parmi H, méthyle et éthyle ;
R² est choisi parmi H, OH, fluor, C₁-C₄alkyle linéaire ou ramifié, C₁-C₆alcoxy où le groupement alkyle est linéaire ou ramifié, ou comprend ou est constitué d'un motif C₃-C₅cycloalkyle ;
R³ est choisi parmi H, méthoxy, méthyle et éthyle ;
ou R² et R³ forment ensemble un motif de pontage -O-CH₂-O- entre les atomes de carbone du phényle auxquels ils sont reliés ;
R⁴ est choisi parmi OH et méthoxy ; et
R⁵ et R⁶ sont choisis indépendamment parmi H et méthyle ;
R¹, R², R³, R⁴, R⁵ et R⁶ étant choisis de telle sorte que
(i) lorsque R² et R³ forment ensemble un motif de pontage -O-CH₂-O- entre les atomes de carbone du phényle auxquels ils sont reliés, R¹, R⁵, R⁶ sont H, et R⁴ est OH ; et
(ii) lorsque R⁴ est OH et R¹-R³ sont H, au moins l'un parmi R⁵, R⁶ est méthyle.
